# EUROPEAN PATENT SPECIFICATION

(11) **EP 1 927 874 B1**
(45) Date of publication and mention of the grant of the patent: **14.01.2015**
(21) Application number: 07022550.3
(22) Date of filing: 21.11.2007
(51) Int. Cl.: G02B 6/44, B65H 51/16

(54) **Method and device for installing a cable into cable guide tubing**
Verfahren und Apparat zur Installierung von Kabeln in Kabelführungsrohren
Méthode et appareil d'installation de câbles dans des conduits de guidage de câble

(30) Priority: 22.11.2006 NL 1032917
(43) Date of publication of application: 04.06.2008
(73) Proprietor: Draka Comteq B.V., 1083 HJ Amsterdam (NL)
(72) Inventor: Versteeg, Patrick Menno, 2225 DR Katwijk Aan Zee (NL); Van't Hul, Cornelis, 2635 KE Den Hoorn (NL); Van Wingerden, Arie, 3341 GH Hendrik Ido Ambacht (NL); Griffioen, Willem, 2461 XJ Ter Aar (NL); Greven, Willem, 9933 AS Delfzijl (NL); Pothof, Thomas, 9905 PN Holwierde (NL)
(74) Representative: Algemeen Octrooi- en Merkenbureau B.V.

(56) References cited:
- EP-A1- 0 296 860
- WO-A-98/26320
- US-A1- 5 699 996
- US-A1- 5 946 788

## Description

The present invention relates to a method for installing or inserting a cable into cable guide tubing of the kind referred to as "duct", wherein a gas flow is effected from the inlet end of the duct in question to the outlet end thereof and a respective cable is introduced into the inlet end.

The present invention further relates to a device for installing or inserting a cable into cable guide tubing of the kind referred to as "duct", comprising: a cable injection unit provided with a hollow, substantially rectilinear cable lead-through channel extending therethrough, which has an entry end and an exit end for leading in and leading out a cable to be installed into the duct in question, which cable injection unit is further provided with a gas channel that opens into the cable lead-through channel, via which gas channel compressed gas can be supplied to the cable lead-through channel.

The method as referred to in the introduction is known per se from European patent No. 0 292 037, which document recognises that the compressed air flow passed through a duct exerts a drag force on the cable being introduced into the duct, as a result of which the cable is pulled through the duct towards the outlet end thereof.

U.S. Pat. No. 5,946,788 relates to a method for inserting a cable into cable guide tubing of the kind referred to as "duct", wherein the duct is wound on a reel, which reel is subjected to a periodical movement having a vertical component and a longitudinal component upon introduction of the cable into the duct. The vertical component comprises a vertical oscillation, which is alternately directed upwards and downwards, viz. opposite to and in the direction of gravity. The longitudinal component may be regarded as an oscillating rotation directed perpendicularly to the vertical component, which oscillation is carried out alternately, viz. in the direction of insertion of the cable into the duct and in the opposite direction. It is assumed that the cable is not in frictional contact during the aforesaid free-fall movement of the reel and is thus capable of moving forward in the duct without friction. This document mentions an oscillation angle of about 6° for the longitudinal component.

International application WO 98/26320 relates to a method for inserting a cable into a duct wound on a reel, wherein the reel is subject to a vertical movement during said insertion, viz. in the direction of gravity and in the opposite direction.

From U.S. Pat. No. 6,179,269 there is known a method and a device for installing a cable into cable guide tubing, wherein the introduction of the cable is carried out by means of a so-called compression station and a tension station, wherein the compression station exerts a compressive force on the cable to urge the cable into the cable guide tubing, and wherein the tension station is disposed at the end of the duct for pulling the cable out of the duct. Such an installation is only suitable for installing cables that can be subjected to a high pulling force.

The present inventors have found that the use of compressed air or blowing technology for installing a cable into a duct is susceptible to a number of problems. When a large number of cables are to be installed into the duct simultaneously, there is a good chance that the cables will be blown into the duct in mutually different lengths, especially if the duct comprises several bends. This means that cables of mutually different length are present in a duct, which may lead to undesirable tensions in the cables. For example, it has been found that if the duct needs to be opened at a particular location, for example for making a connection to another cable, those cables that have a greater length will project from the opened duct, causing protrusions at that location. A drawback of this is that the intended connection cannot be effected in the desired manner and that, in addition, damage may be caused to the cables. Furthermore, blowing cables into the duct in mutually different lengths leads to mutual friction between the various cables, so that the installation in the duct becomes more difficult and less distance can be bridged.

It is an object of the present invention to provide a method and a device for installing a cable into cable guide tubing, wherein the cables can be installed over a large distance without the cable in the cable guide tubing being under a high tension.

Another object of the present invention is to provide a method and a device for installing a cable into cable guide tubing, wherein access can be gained to the cables present in the cable guide tubing in any desired way without the cable exhibiting protrusions after the cable guide tubing has been opened.

The method as referred to in the introduction is characterised in that the duct rotates with respect to the cable upon introduction of the cable into the duct in such a manner that a rotation through at least 360° is carried out.

One or more of the above objects are accomplished when such a method is used. Although the term "cable" is used herein, it should be understood that the term "cable" as used in the present disclosure may be understood to be a cable consisting of one or more (bundles of) longitudinally extending elements, for example a number of tubes (so-called microducts), into which optical glass fibre cables (so-called microduct cables) can in turn be installed. The present inventors have found that as a result of the aforesaid rotation the cable, which comprises a number of individual cable units, is introduced into the duct in such a manner that the individual cable units have substantially the same length. As a result of said substantially identical length, there will be no internal tensions in the duct, so that the occurrence of protrusions after the jacket of the duct has been opened will belong to the past. Although the present disclosure discusses rotation of the duct with respect to the cable, it should furthermore be understood that it is also possible to rotate the cable with respect to the duct. As a result of said rotation, the cable will generally be accommodated in the duct in a helical or SZ-spiral configuration.

In a special embodiment it is preferable if the duct rotates with respect to the cable about an axis that is perpendicular to the plane that defines the inlet end of the duct. Such an embodiment comprises a situation in which the axis of rotation of the duct extends more or less parallel to the direction in which the cable is introduced into the inlet end of the duct.

When such an embodiment is used, the cables to be guided into the duct will be subjected to substantially identical frictional forces from the inner wall of the duct, as a result of which each one of the cables will be installed in the duct in substantially the same length.

It is furthermore preferable if the duct is present on a reel, so that the duct, after manufacture thereof, can be provided with the cables, thus obtaining a so-called "prefab" product comprising a reel on which a duct is present, in which duct the cables are present, with the cables being accommodated in the duct in a spiral configuration.

If the duct is present on the aforesaid reel, it is preferable if the rotation of the reel takes place in such a manner that the reel is rotated about the central axis thereof.

In another embodiment the reel may rotate about an axis that is disposed at an angle relative to the central axis of the reel.

Said rotation may be carried out in such a manner that the direction of rotation alternates, which means that rotation takes place in clockwise direction for a predetermined period during the installation of the cable into the cable guide tubing, after which the direction of rotation is reversed. It is also possible, however, to maintain the same direction of rotation during the entire process of inserting the cable into the cable guide tubing. The rotation used in the present invention is a full rotation, viz. 360°, about the axis of rotation. Said rotation may take place continuously, which means that according to the present method the duct is rotated continuously during the insertion of the cable into the cable guide tubing, which rotation can be carried out alternately in clockwise direction and in anti-clockwise direction, with full rotations, viz. multitudes of 360°, typically one or two full rotations, being carried out each time, however.

To realise the desired length of the cables in the cable guide tubing, it is preferable to set the speed at which rotation takes place so that it is related to the speed at which the cable is being introduced into the duct. Such an embodiment comprises a situation in which the axis of rotation of the duct extends more or less parallel to the direction in which the cable is introduced into the inlet end of the duct.

To obtain a constant and controlled introduction of the cable into the duct it is preferable if suitable pressure forces are exerted on the cable near the inlet end for guiding the cable in the direction of the duct. Said pressure forces are preferably exerted by a set of wheels, which function to move a cable present therebetween and being in contact therewith in the direction of the exit end of the cable lead-through channel. The speed at which the cable is introduced into the duct is preferably influenced by the speed at which the wheels are driven.

The term "cable" as used in the present disclosure may in particular be understood to refer to a number of individual cable units, which individual cable units may also be tubes, which in turn may each comprise cables containing a number of optical waveguides, such as optical glass fibres. A number of optical waveguides may be wound around a central strenghtening element.

The device as referred to in the introduction is characterised in that the exit end of the cable lead-through channel is connected to an inlet portion of a rotation coupling unit, the outlet portion of which rotation coupling unit is connected to the duct, which duct is rotatable about an axis with respect to the cable.

In a special embodiment of the present device it is preferable if the axis about which the duct is rotatable with respect to the cable is perpendicular to the plane that defines the inlet end of the duct. Such an embodiment comprises a situation in which the axis of rotation of the duct extends more or less parallel to the direction in which the cable is introduced into the inlet end of the duct.

It is furthermore preferable if a set of wheels is mounted at an upstream location, seen in the direction in which the cable is led in the direction of the duct, which wheels function to move a cable present therebetween and being in contact therewith ahead in the direction of the exit end of the cable lead-through channel.

To be able to carry out the rotation in an advantageous manner, a conduit is preferably present between the exit end of the cable lead-through channel and the inlet portion of the rotation coupling unit.

The duct is preferably present on a reel, which reel is rotatable about the central axis of the reel. In a special embodiment of the present device, the reel may also be rotatable about an axis that is disposed at an angle relative to the central axis of the reel.

The duct, which is present on the reel, is preferably connected to the reel at the circumferential end of the reel, the so-called flange, for example by means of a clamp on the flange, which ensures that the duct is fixed in position with respect to the reel, which ensures that the duct is not undesirably unwound from the reel or pulled tight, in particular during rotation of the duct.

In a special embodiment it is also possible to carry out the rotation by having the aforesaid set of wheels carry out a movement in a direction transversely to the direction of transport of the cable, so that the cable is led into the duct while being rotated. In such an embodiment there is no need to rotate the duct that is present on the reel.

The present inventors have carried out a number of experiments, with the following results.

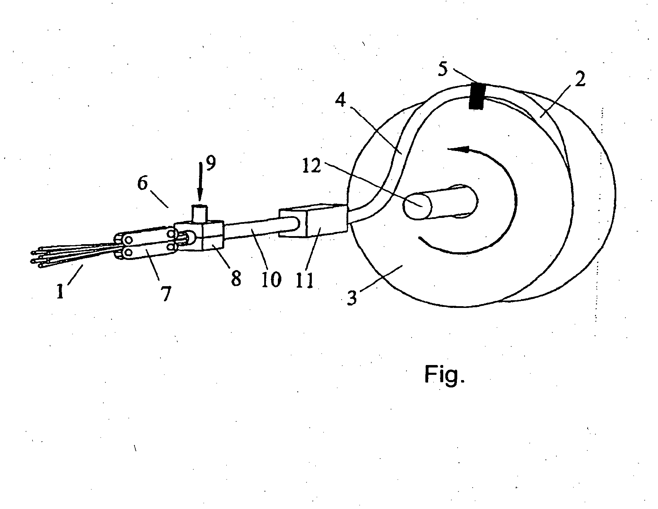

The figure shows an embodiment of the present invention.

### Example 1

A number of 7 microducts having an external diameter of 7 mm, to be regarded as the "cable" discussed herein, were simultaneously introduced into a duct having an internal diameter of 23 mm by means of a blowing method, using equipment as disclosed in European patent No. 0 292 037. The length of the duct was 500 metres. The aforesaid cable bundle did not reach the end of the duct, it was only blown into the duct over a distance of 16 metres.

### Example 2

A cable consisting of 4 microducts having an external diameter of 12 mm was introduced into a duct having an internal diameter of 33 mm by means of a blowing method. The length to be installed was 950 m, using equipment as disclosed in European patent No. 0 292 037. Although the length that could be installed was acceptable, the operation was frequently found to be very difficult, and the compressed air pressure being used was too high, so that there was a considerable risk of implosion of microducts. In addition, excessive pressure forces were used, with the attendant risk of the microducts being damaged.

### Example 3

Four sub-bundles consisting of 6 microducts having an external diameter of 4 mm, which were wound around a central stiffening element having a diameter of 4.2 mm, were introduced into a duct having an internal diameter of 33 mm, using the method described in Examples 1 and 2. A length of 950 mm was effected. The same problems as in Example 2 were encountered. Also in this example problems occurred in the field during installation of the duct in that different lengths of the sub-bundles in the duct were observed, so that the use of such ducts led to problems. Furthermore, protrusion problems were observed.

### Example 4

The device according to the present invention as shown in the appended figure was used, and a bundle 1 of a number of microducts known from the prior art, which may or may not be provided with a central strengthening element, was introduced into a duct 2 present on a reel 3. The duct 2 is fixed to a circumferential end of the reel 3 with an end 4 by means of a clamp 5 on the flange thereof. The bundle 1 of microducts is fed to a cable injection unit 6 preceded by a set of wheels 7, which cable injection unit 6 comprises a hollow lead-through channel 8 provided with an inlet 9 for compressed air, the exit end of which cable injection unit 6 is connected to a rotation coupling unit 11 via a conduit 10, the outlet end of which rotation coupling unit 11 is connected to the end 4 of the duct 2. It has been found to be possible to introduce the individual microducts, which may or may not be provided with a central strengthening element, in substantially identical lengths into the duct 2 present on the reel 3 by rotating the reel 3 about a central axis 12 in the direction indicated by the arrow shown in the figure when the bundle 1 of microducts is being fed to the duct 2 under the influence of the compressed air being supplied, via the set of wheels 7, the cable injection unit 6, the conduit 10 and the rotation coupling unit 11, so that the problems mentioned in Examples 1, 2 and 3 were solved. Said rotation is carried out in such a manner that a rotation in the direction in question comprises a full rotation, viz. at least through 360°. Thus, a continuous rotation takes place, which rotation can furthermore be reversed after a few full rotations, after which one or more full rotations can be carried out again, possibly followed by a renewed reversal of the direction of rotation. It has been found that when the continuous rotation of 360° employed by the present invention is used, the microducts 1 inserted into the duct 2 have an SZ-spiral configuration, which is retained for a long period of time. Although it is indicated in this embodiment that the duct 2 is rotated with respect to the static cable injection unit 6, the set of wheels 7, the conduit 10 and the rotation coupling unit 3, it should be understood that it is also possible to make the aforesaid cable injection unit 6, set of wheels 7, conduit 10 and rotation coupling unit 11 rotatable with respect to a static (in such an embodiment) reel 3. In a special embodiment it is possible, therefore, to have the set of wheels 7 rotate round the bundle 1 of microducts, whilst the other parts mentioned above, among which the reel 3, are not rotated, so that the bundle 1 will rotate with respect to the duct 2 upon being introduced into the duct 2.

## Claims

1. A method for installing a cable into cable guide tubing of the kind referred to as "duct", wherein a gas flow is supplied from the inlet end of said duct (2) in question to the outlet end thereof and a respective cable is introduced into the inlet end, wherein the duct (2) is present on a reel (3) and rotates with respect to the cable upon introduction of the cable into the duct (2), **characterised in that** the duct (2) is rotated with respect to the cable during insertion of the cable into the duct (2), in such a manner that a rotation through at least 360° is carried out.

2. A method according to claim 1, **characterised in that** the duct (2) rotates with respect to the cable about an axis that is perpendicular to the plane that defines the inlet end of the duct (2).

3. A method according to claims 1-2, **characterised in that** the reel rotates about the central axis of the reel (3).

4. A method according to claim 1, **characterised in that** the reel rotates about an axis that is disposed at an angle relative to the central axis of the reel (3).

5. A method according to any one or more of the preceding claims, **characterised in that** the direction of rotation alternates.

6. A method according to any one or more of the preceding claims, **characterised in that** pressure forces are exerted on the cable near the inlet end for guiding the cable in the direction of the duct (2).

7. A method according to any one or more of the preceding claims, **characterised in that** the speed at which rotation takes place is related to the speed at which the cable is being introduced into the duct (2).

8. A method according to claim 6, **characterised in that** said pressure forces are exerted by a set of wheels (7) for moving move a cable present therebetween and being in contact therewith in the direction of the inlet end of the duct (2).

9. A method according to claim 8, **characterised in that** the speed at which the cable is introduced into the duct (2) is influenced by the speed at which the wheels (7) are driven.

10. A method according to any one or more of the preceding claims, **characterised in that** a number of individual cable units are used as said cable, which individual cable units may be regarded as a cable consisting of one or more (bundles) of longitudinally extending elements, which elements may comprise a number of optical waveguides, possibly provided with a central stiffening element.

11. A method according to any one of the preceding claims, **characterised in that** a rotation in one direction comprises at least two full rotations.

12. A device for installing a cable into cable guide tubing of the kind referred to as "duct", comprising: a cable injection unit (6) provided with a hollow, substantially rectilinear cable lead-through channel (8) extending therethrough, which has an entry end and an exit end for leading in and leading out a cable to be installed into said duct (2) in question, which cable injection unit (6) is further provided with a gas channel that opens into the cable lead-through channel (8), via which gas channel compressed gas is supplied to the cable lead-through channel (8), wherein the exit end of the cable lead-through channel (8) is connected to an inlet portion of a rotation coupling unit (11) and its outlet portion is connected to said duct (2), which duct (2) is rotatable about an axis with respect to the cable, **characterised in that** said duct (2) is present on a reel (3) enabling a rotation through at least 360°.

13. A device according to claim 12, **characterised in that** the axis about which the duct (2) is rotatable with respect to the cable lies in the plane in which the cable is introduced into the inlet end of the duct (2).

14. A device according to either one or both of the claims 12-13, **characterised in that** a conduit (10) is present between the exit end of the cable lead-through channel (8) and the inlet portion of the rotation coupling unit (11).

15. A device according to any one or more of the claims 12-14, **characterised in that** said reel (3) is rotatable about the central axis of the reel (3).

16. A device according to any one or more of the claims 12-14. **characterized in that** said reel (3) is rotatable about an axis that is disposed at an angle relative to the central axis of the reel (3).

17. A device according to any one or more of the claims 12-16, **characterised in that** said duct (2) is connected to the reel (3) at a circumferential end of the reel (3).

18. A device according to any one or more of the claims 12-17, **characterised in that** a set of wheels is mounted at an upstream location, seen in the direction in which the cable is led in the direction of the duct (2), which wheels function to move a cable present therebetween and being in contact therewith ahead in the direction of the exit end of the cable lead-through channel (8).

19. A device according to claim 18, **characterised in that** said set of wheels (7) carry out a movement transversely to the direction of transport of the cable so as to guide the cable into the duct (2) while being rotated.

## Patentansprüche

1. Verfahren zur Installation eines Kabels in Kabelführungsrohrleitungen der Art, die als "Kabelkanal" bezeichnet werden, wobei ein Gasstrom vom Einlassende des betreffenden Kabelkanals (2) zu dessen Auslassende zugeführt wird und ein entsprechendes Kabel in das Einlassende eingeführt wird, wobei sich der Kabelkanal (2) auf einer Trommel (3) befindet und sich bei Einführung des Kabels in den Kabelkanal (2) bezüglich des Kabels dreht, **dadurch gekennzeichnet, dass** der Kabelkanal (2) während der Einbringung des Kabels in den Kabelkanal (2) bezüglich des Kabels so gedreht wird, dass eine Drehung um mindestens 360° ausgeführt wird.

2. Verfahren nach Anspruch 1, **dadurch gekennzeichnet, dass** sich der Kabelkanal (2) bezüglich des Kabels um eine Achse dreht, die senkrecht zu der Ebene ist, die das Einlassende des Kabelkanals (2) definiert.

3. Verfahren nach den Ansprüchen 1 bis 2, **dadurch gekennzeichnet, dass** sich die Trommel um die Mittelachse der Trommel (3) dreht.

4. Verfahren nach Anspruch 1, **dadurch gekennzeichnet, dass** sich die Trommel um eine Achse dreht, die in einem Winkel zur Mittelachse der Trommel (3) liegt.

5. Verfahren nach einem oder mehreren der vorhergehenden Ansprüche, **dadurch gekennzeichnet, dass** die Drehrichtung wechselt.

6. Verfahren nach einem oder mehreren der vorhergehenden Ansprüche, **dadurch gekennzeichnet, dass** nahe dem Einlassende Druckkräfte auf das Kabel ausgeübt werden, um das Kabel in Richtung des Kabelkanals (2) zu führen.

7. Verfahren nach einem oder mehreren der vorhergehenden Ansprüche, **dadurch gekennzeichnet, dass** die Geschwindigkeit, mit der die Drehung stattfindet, mit der Geschwindigkeit in Beziehung steht, mit der das Kabel in den Kabelkanal (2) eingeführt wird.

8. Verfahren nach Anspruch 6, **dadurch gekennzeichnet, dass** die Druckkräfte von einem Satz Räder (7) ausgeübt werden, um ein Kabel, das sich dazwischen befindet und damit in Kontakt ist, in Richtung des Einlassendes des Kabelkanals (2) zu bewegen.

9. Verfahren nach Anspruch 8, **dadurch gekennzeichnet, dass** die Geschwindigkeit, mit der das Kabel in den Kabelkanal (2) eingeführt wird, von der Geschwindigkeit beeinflusst wird, mit der die Räder (7) angetrieben werden.

10. Verfahren nach einem oder mehreren der vorhergehenden Ansprüche, **dadurch gekennzeichnet, dass** eine Anzahl einzelner Kabeleinheiten als das Kabel verwendet werden, wobei die einzelnen Kabeleinheiten als Kabel betrachtet werden können, das aus einem oder mehreren (Bündeln von) sich längs erstreckenden Elementen besteht, wobei die Elemente eine Anzahl Lichtwellenleiter umfassen können, die gegebenenfalls mit einem zentralen Versteifungselement versehen sind.

11. Verfahren nach einem der vorhergehenden Ansprüche, **dadurch gekennzeichnet, dass** eine Drehung in eine Richtung mindestens zwei volle Drehungen umfasst.

12. Vorrichtung zur Installation eines Kabels in Kabelführungsrohrleitungen der Art, die als "Kabelkanal" bezeichnet werden, mit: einer Kabeleinblaseinheit (6), die mit einem sich durch sie hindurch erstreckenden hohlen, im Wesentlichen geradlinigen Kabeldurchführungskanal (8) versehen ist, der ein Eintrittsende und ein Austrittsende zum Hineinführen und Herausführen eines in den betreffenden Kabelkanal (2) einzubringenden Kabels hat, wobei die Kabeleinblaseinheit (6) ferner mit einem Gaskanal versehen ist, der in den Kabeldurchführungskanal (8) mündet, wobei dem Kabeldurchführungskanal (8) über den Gaskanal Druckgas zugeführt wird, wobei das Austrittsende des Kabeldurchführungskanals (8) mit einem Einlassabschnitt einer Drehkopplungseinheit (11) verbunden ist und deren Auslassabschnitt mit dem Kabelkanal (2) verbunden ist, wobei der Kabelkanal (2) bezüglich des Kabels um eine Achse drehbar ist, **dadurch gekennzeichnet, dass** sich der Kabelkanal (2) auf einer Trommel (3) befindet, die eine Drehung um mindestens 360° ermöglicht.

13. Vorrichtung nach Anspruch 12, **dadurch gekennzeichnet, dass** die Achse, um die der Kabelkanal (2) bezüglich des Kabels drehbar ist, in der Ebene liegt, in der das Kabel in das Einlassende des Kabelkanals (2) eingeführt wird.

14. Vorrichtung nach einem oder beiden der Ansprüche 12 bis 13, **dadurch gekennzeichnet, dass** sich zwischen dem Austrittsende des Kabeldurchführungskanals (8) und dem Einlassabschnitt der Drehkopplungseinheit (11) ein Leitungsrohr (10) befindet.

15. Vorrichtung nach einem oder mehreren der Ansprüche 12 bis 14, **dadurch gekennzeichnet, dass** die Trommel (3) um die Mittelachse der Trommel (3) drehbar ist.

16. Vorrichtung nach einem oder mehreren der Ansprüche 12 bis 14, **dadurch gekennzeichnet, dass** die Trommel (3) um eine Achse drehbar ist, die in einem Winkel zur Mittelachse der Trommel (3) liegt.

17. Vorrichtung nach einem oder mehreren der Ansprüche 12 bis 16, **dadurch gekennzeichnet, dass** der Kabelkanal (2) an einem Umfangsende der Trommel (3) mit der Trommel (3) verbunden ist.

18. Vorrichtung nach einem oder mehreren der Ansprüche 12 bis 17, **dadurch gekennzeichnet, dass** an einer stromaufwärtigen Stelle, in der Richtung betrachtet, in der das Kabel in Richtung des Kabelkanals (2) geführt wird, ein Satz Räder angebracht ist, wobei die Räder so wirken, dass sie ein Kabel, das sich dazwischen befindet und damit in Kontakt ist, in Richtung des Austrittsendes des Kabeldurchführungskanals (8) vorbewegen.

19. Vorrichtung nach Anspruch 18, **dadurch gekennzeichnet, dass** der Satz Räder (7) eine Bewegung quer zur Transportrichtung des Kabels ausführt, um so das Kabel in den Kabelkanal (2) zu führen, während dieser gedreht wird.

## Revendications

1. Procédé pour installer un câble dans un tubage de guidage de câble du type appelé « conduit », dans lequel un écoulement de gaz est fourni de l'extrémité d'entrée dudit conduit (2) en question à l'extrémité de sortie de celui-ci et un câble respectif est introduit dans l'extrémité d'entrée, dans lequel le conduit (2) est présent sur une bobine (3) et tourne par rapport au câble lors de l'introduction du câble dans le conduit (2), **caractérisé en ce que** le conduit (2) est tourné par rapport au câble durant l'insertion du câble dans le conduit (2), de manière telle qu'une rotation d'au moins 360° soit réalisée.

2. Procédé selon la revendication 1, **caractérisé en ce que** le conduit (2) tourne par rapport au câble autour d'un axe qui est perpendiculaire au plan qui définit l'extrémité d'entrée du conduit (2).

3. Procédé selon les revendications 1 et 2, **caractérisé en ce que** la bobine tourne autour de l'axe central de la bobine (3).

4. Procédé selon la revendication 1, **caractérisé en ce que** la bobine tourne autour d'un axe qui est disposé à un angle par rapport à l'axe central de la bobine (3).

5. Procédé selon une ou plusieurs quelconques des revendications précédentes, **caractérisé en ce que** la direction de rotation alterne.

6. Procédé selon une ou plusieurs quelconques des revendications précédentes, **caractérisé en ce que** des forces de pression sont exercées sur le câble près de l'extrémité d'entrée pour guider le câble dans la direction du conduit (2).

7. Procédé selon une ou plusieurs quelconques des revendications précédentes, **caractérisé en ce que** la vitesse à laquelle la rotation a lieu est liée à la vitesse à laquelle le câble est introduit dans le conduit (2).

8. Procédé selon la revendication 6, **caractérisé en ce que** lesdites forces de pression sont exercées par un jeu de roues (7) pour déplacer un câble présent entre celles-ci et en contact avec ceux-ci dans la direction de l'extrémité d'entrée du conduit (2).

9. Procédé selon la revendication 8, **caractérisé en ce que** la vitesse à laquelle le câble est introduit dans le conduit (2) est influencée par la vitesse à laquelle les roues (7) sont entraînées.

10. Procédé selon une ou plusieurs quelconques des revendications précédentes, **caractérisé en ce qu'**un nombre d'unités de câble individuelles sont utilisées en tant que ledit câble, lesquelles unités de câble individuelles peuvent être considérées comme un câble constitué d'un ou de plusieurs (groupes) d'éléments s'étendant longitudinalement, lesquels éléments peuvent comprendre un nombre de guides d'ondes optiques, éventuellement pourvus d'un élément de renfort central.

11. Procédé selon une quelconque des revendications précédentes, **caractérisé en ce qu'**une rotation dans une direction comprend au moins deux rotations complètes.

12. Dispositif pour installer un câble dans des tubages de guidage de câble du type appelé « conduit », comprenant : une unité d'injection de câble (6) pourvue d'un canal de guidage de câble creux sensiblement rectiligne (8) s'étendant à travers celui-ci, qui comporte une extrémité d'entrée et une extrémité de sortie pour guider l'entrée et la sortie d'un câble destiné à être installé dans ledit conduit (2) en question, laquelle unité d'injection de câble (6) est en outre pourvue d'un canal à gaz qui donne dans le canal de guidage de câble (8), par l'intermédiaire duquel canal à gaz un gaz comprimé est fourni au canal de guidage de câble (8), dans lequel l'extrémité de sortie du canal de guidage de câble (8) est raccordée à une partie d'entrée d'une unité d'accouplement à rotation (11) et sa partie de sortie est raccordée audit conduit (2), lequel conduit (2) est rotatif autour d'un axe par rapport au câble, **caractérisé en ce que** ledit conduit (2) est présent sur une bobine (3) permettant une rotation d'au moins 360°.

13. Dispositif selon la revendication 12, **caractérisé en ce que** l'axe autour duquel le conduit (2) est rotatif par rapport au câble se trouve dans le plan dans lequel le câble est introduit dans l'extrémité d'entrée du conduit (2).

14. Dispositif selon l'une ou les deux des revendications 12 à 13, **caractérisé en ce qu'**un conduit (10) est présent entre l'extrémité de sortie du canal de guidage de câble (8) et la partie d'entrée de l'unité d'accouplement à rotation (11).

15. Dispositif selon une ou plusieurs quelconques des revendications 12 à 14, **caractérisé en ce que** ladite bobine (3) est rotative autour de l'axe central de la bobine (3).

16. Dispositif selon une ou plusieurs quelconques des revendications 12 à 14, **caractérisé en ce que** ladite bobine (3) est rotative autour d'un axe qui est disposé à un angle par rapport à l'axe central de la bobine (3).

17. Dispositif selon une ou plusieurs quelconques des revendications 12 à 16, **caractérisé en ce que** ledit conduit (2) est raccordé à la bobine (3) à une extrémité circonférentielle de la bobine (3).

18. Dispositif selon une ou plusieurs quelconques des revendications 12 à 17, **caractérisé en ce qu'**un jeu de roues est monté à un emplacement en amont, en vue dans la direction dans laquelle le câble est guidé dans la direction du conduit (2), lesquelles roues servent à déplacer un câble présent entre celles-ci et en contact avec ceux-ci à l'avant dans la direction de l'extrémité de sortie du canal de guidage de câble (8).

19. Dispositif selon la revendication 18, **caractérisé en ce que** ledit jeu de roues (7) réalise un mouvement transversalement à la direction de transport du câble afin de guider le câble dans le conduit (2) tout en étant tournées.
